(19)

Europäisches
Patentamt
European
Patent Office
Office européen
des brevets

(11) **EP 3 293 701 B1**

(12) **EUROPEAN PATENT SPECIFICATION**

(45) Date of publication and mention
of the grant of the patent:
**06.11.2019 Bulletin 2019/45**

(51) Int Cl.:
***G06T 7/80*** *(2017.01)*     ***G06T 7/00*** *(2017.01)*

(21) Application number: **16187553.9**

(22) Date of filing: **07.09.2016**

(54) **METHOD AND APPARATUS FOR THE COMPENSATION OF STATIC IMAGE DISTORTIONS INTRODUCED BY A WINDSHIELD ONTO AN ADAS CAMERA**

VERFAHREN UND VORRICHTUNG ZUM AUSGLEICH VON STATISCHEN BILDVERZERRUNGEN, DIE DURCH EINE WINDSCHUTZSCHEIBE AUF EINER ADAS-KAMERA EINGELEITET WERDEN

PROCÉDÉ ET APPAREIL POUR LA COMPENSATION DE DISTORSIONS D'IMAGES STATIQUES INTRODUITES PAR UN PAREBRISE SUR UNE CAMÉRA D'AIDE À LA CONDUITE AUTOMOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.03.2018 Bulletin 2018/11**

(73) Proprietor: **Conti Temic Microelectronic GmbH 90411 Nürnberg (DE)**

(72) Inventors:
• **Lasaruk, Aless
  88131 Lindau (DE)**
• **Franklin Neralla, David
  01309 Dresden (DE)**

(56) References cited:
**WO-A1-2015/133414**     **FR-A1- 3 032 820**
**GB-A- 2 396 005**

• **NIENABER S ET AL: "A Comparison of Low-Cost Monocular Vision Techniques for Pothole Distance Estimation", 2015 IEEE SYMPOSIUM SERIES ON COMPUTATIONAL INTELLIGENCE, IEEE, 7 December 2015 (2015-12-07), pages 419-426, XP032843083, DOI: 10.1109/SSCI.2015.69 ISBN: 978-1-4799-7560-0 [retrieved on 2016-01-07]**
• **JIANHUA WANG ET AL: "Camera Calibration from a Single Frame of Planar Pattern", 1 January 2006 (2006-01-01), ADVANCED CONCEPTS FOR INTELLIGENT VISION SYSTEMS LECTURE NOTES IN COMPUTER SCIENCE;;LNCS, SPRINGER, BERLIN, DE, PAGE(S) 576 - 587, XP019043379, ISBN: 978-3-540-44630-9 * the whole document ***
• **YISONG CHEN ET AL: "Full Camera Calibration from a Single View of Planar Scene", 1 December 2008 (2008-12-01), ADVANCES IN VISUAL COMPUTING, SPRINGER BERLIN HEIDELBERG, BERLIN, HEIDELBERG, PAGE(S) 815 - 824, XP019112138, ISBN: 978-3-540-89638-8 * the whole document ***
• **JOAO P. BARRETO ET AL: "Automatic Camera Calibration Applied to Medical Endoscopy", PROCEDINGS OF THE BRITISH MACHINE VISION CONFERENCE 2009, 1 January 2009 (2009-01-01), pages 52.1-52.10, XP055096214, DOI: 10.5244/C.23.52 ISBN: 978-1-90-172539-1**

**Description**

Technical area

The invention relates to the calibration of an ADAS camera. Specifically, the invention relates to a novel camera model and a method for calibration of a camera behind the windshield of a vehicle. The camera model extends the generalized pinhole camera model by an additional non-trivial parametric component, which explains the effects of the windshield viewed as a part of the optical system of the camera. The new method focuses on compensation of static effects of a windshield to the images of an ADAS camera system. Here, the word "static" refers to the fact that, once calibrated, the windshield related parameters of the proposed camera model are valid for multiple unmeasured windshields of the same type. A new calibration method is presented, which utilizes a planar checkerboard pattern to estimate the windshield relevant parameters of the new model. The calibration can be applied either in the laboratory or directly in the vehicle by mounting the target over the motor hood. Application of the model in practice shows to significantly improve image rectification and disparity computation of a stereo camera. An analogous gain in performance can be achieved for mono cameras.

Technical background

In computer vision, a physical camera device is modelled essentially by its geometric projection properties . Given a point of an object in space, such a projection formally explains, where the point will appear in the image. For Advanced Driver Assistant Systems (ADAS), accurate estimates of the camera projection are essential for accurately estimating the distance to objects in front of the vehicle. Latter, in turn, is crucial for camera based traffic safety applications like, for example, automated braking or automated cruise control.

For ADAS purposes in a vehicle, the camera is typically mounted behind the windshield in the mirror cover. Evidently, this solves the problem of blocking the camera lenses by dirt or rain. Unfortunately, the particular location of the camera introduces the optical properties of the windshield into the projection geometry of the complete optical system. Windshield influences can introduce a substantially different behaviour of the optical paths compared to that of the coaxially ordered lenses inside the camera optics. Consequently, the optical system of the camera together with the windshield can yield significant image deviations compared to the same camera without the windshield in front of it. The above class of optical distortions are refered to as windshield distortions of the camera image.

The problem of estimation of the projection properties of an optical system including any type of emerging distortions is referred to as camera calibration. Typically, latter process has a parametric character. That is, there is a family of functions - a camera model - customized by a vector of parameters, which for each fixed vector of parameters describes a physical camera device, that is, how points in space are projected onto the image by this particular camera. The vector above is referred then to as the camera parameters.

The application of a camera model in ADAS usually addresses the inverse problem to projection. That is, given a pixel location in the image, the objective is to estimate the set of points in space that are imaged to this particular pixel location. Camera calibration is then utilized as a tool to remove the unwanted influences of the optics in order to describe the optical system by a computationally simple model. This simple model is a pinhole camera, which is in turn essentially the central projection. The ultimate objective of the windshield distortion model is to deform the imager plane, or equivalently the image, such that after this deformation the camera behaves as if there were no windshield between it and the observed scene. The above process of removing the unwanted image deformations is refered to as image rectification. In particular for stereo imaging, rectification is a major tool to estimate dense distance maps of a scene efficiently. Stereo rectification modifies the images of a system of two different cameras as to come from a parallel system of two optically identical pinhole cameras. In such a system, corresponding object points can be found on the same horizontal image line, which significantly simplifies the search for corresponding points and, consequently, the disparity computation. Latter function of a camera model is a central quality measure and objective of the invention.

Ignoring the impact of the windshield distortion can severely obscure the distance estimation to objects, in particular at short distances, in front of the vehicle. Consequently, it is essential to model and estimate the windshield distortions together with other parameters of the camera system. Unfortunately, some properties of the camera distortions can not be estimated accurately by observing natural traffic scenes during driving. Therefore, it is obvious to introduce a distortion model, which approximately applies for a particular class of windshields of commercial vehicles. Such a model is referred to as a static windshield model. The invention introduces a novel camera model and a method for estimation of static windshield relevant parameters for this model.

The new camera model is an extension of the widely used generalized pinhole camera model. In particular, the central projection is modified to a generalized parametric projection, which introduces distortion properties of the windshield. The invention introduces a novel general method to derive such distortion models systematically. This method can be applied to derive a concrete subclass of distortion models, which describes windshields with small curvature, i.e.

windshields that are essentially flat. Latter class applies well to windshields of personal commercial vehicles.

Furthermore, the invention allows to modify a classical camera calibration method to a winshield calibration method. It is assumed that the intrinsic parameters of the camera, like the focal length or skew, do not change during the lifetime of the physical system. Hence, it is assumed that the intrinsic parameters of the camera model without the windshield are known. The calibration approach is based on the observation that subject to the fixed known intrinsic parameters, the standard camera calibration approach with checkerboard planes turns to a method for estimating the windshield distortions together with the extrinsic parameters of the camera.

The new windshield camera model does not allow image rectification, as the corrections to be done to reach the associated pinhole camera model image depend on the distance to the objects in the scene. However, when focused to perform well at a particular distance, the model simplifies to an image deformation model.

A camera model in this document describes a parametric map, which explains the property of a physical camera device to map points in space to pixel locations in the image. In the state of the art, a so-called generalized pinhole camera model may be used in ADAS software for front view cameras.

A generalized pinhole camera model, simply called a camera model, is defined by a map $k \; : \; \mathbb{R}^3 \; \times \; \mathbb{R}^d \; \to \; \mathbb{R}^2$ (with a natural number d) of the form

$$k(s, \boldsymbol{\theta}) = p(d(\pi(m(s, \theta)), \boldsymbol{\theta}), \boldsymbol{\theta}). \qquad \textbf{(equation 1)}$$

The action of an instance of this model is given by fixing a set of camera parameters $\boldsymbol{\theta} \; \in \; \mathbb{R}^d$. For such a fixed $\theta$, the point $\mathbf{s} \; \in \; \mathbb{R}^3$ in space is mapped to the pixel location $k(\boldsymbol{s}, \theta)$ in the image.

Each component function, say $m, p$, etc., of the proposed camera model uses a particular part of the parameter vector $\theta$. The component functions are given as follows. The camera pose $m$ : $\mathbb{R}^3 \; \times \; \mathbb{R}^d \to \mathbb{R}^3$ is a motion in space, or $m(\boldsymbol{s}, \theta) = \boldsymbol{R}(\boldsymbol{s}\text{-}\boldsymbol{t})$, where $\boldsymbol{R}$ is typically parametrized by three angles yaw, pitch, and roll and $t \; \in \; \mathbb{R}^3$ is the position of the camera in a reference coordinate system. The latter is simply referred to as the world coordinate system. The parameters of the pose are called extrinsic parameters. The remaining camera parameters are called the intrinsic parameters. The point m($s$, $\theta$) is said to be in the local coordinate system of the camera. The central projection $\pi \; : \; \mathbb{R}^3 \setminus \{z = 0\} \to \mathbb{R}^2$ is given by

$$\pi(x, y, z) = \frac{1}{z}\begin{pmatrix} x \\ y \end{pmatrix}. \qquad \textbf{(equation 2)}$$

This function maps space points in the local coordinate system of the camera to plane points. The range of $\pi$ can be seen as to lie on the so-called z = 1-plane (or the more optically convenient z = -1-plane alternatively by dividing by -$z$).

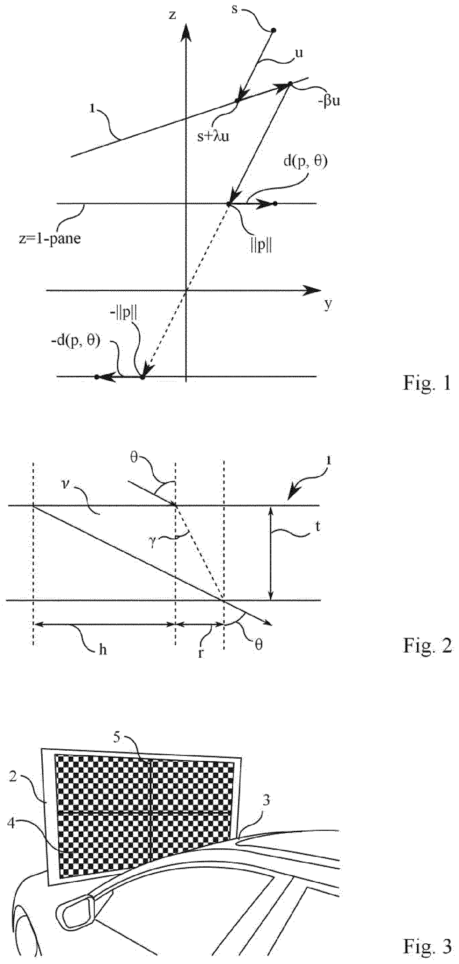

**Figure** 1 shows a sketch of the central projection property of the camera in the x-direction with the addition of a windshield plane 1, which will be discussed later on. For simplicity, all figures are presented in the local camera coordinate system. Since the central projection divides meters by meters by definition, the *z* = 1-plane coordinates are unitless.

The *z* = 1-plane reflects the imager pixels on the physical camera device. The first-order optics $p \; : \; \mathbb{R}^2 \; \times \; \mathbb{R}^d \to \mathbb{R}^2$ with

$$p(\mathbf{p}, \boldsymbol{\theta}) = \begin{pmatrix} \alpha & \gamma \\ 0 & \beta \end{pmatrix}\mathbf{p} + \begin{pmatrix} u \\ v \end{pmatrix} \qquad \textbf{(equation 3)}$$

defines the relation between the coordinates in the *z* = 1-plane and the image coordinates. The parameters $0 < \alpha, \beta \in \mathbb{R}$ are called focal parameters. Since they are positive, the first-order optics is an invertible map. It can be easily seen that the origin of the *z* = 1-plane is mapped to the point (*u*, *v*) in the image. This point is called the principal point. It is as well not hard to see that $(u,v)$ is the image of the z-axis of the local coordinate system of the camera. The line of space points imaged to the principal point is called the principal axis (or the optical axis) of the camera model.

Finally, the distortion $d : \mathbb{R}^2 \times \mathbb{R}^d \to \mathbb{R}^2$ is an invertible deformation of the $z$ = 1-plane, which resembles the optical distortions of the camera. The distortion function $d$ typically splits additively into component functions $d = r + t$, which implement the Brown's distortion model. Here, $r$ reflects the radially symmetric and $t$ the tangential distortions.

The radial distortions r are given by the function

$$r(\mathbf{p}, \boldsymbol{\theta}) = \left(1 + \sum_{i=1}^{k} r_i ||\mathbf{p}||^{2i}\right) \mathbf{p} \qquad \text{(equation 4)}$$

Typically, the number of distortion parameters $r_i$ (which are part of $\theta$) is $k = 2$ or $k = 3$.

The tangential distortions t are given by the formula

$$t(\mathbf{p}, \boldsymbol{\theta}) = \left(1 + \sum_{i=3}^{l} t_i ||\mathbf{p}||^{2i}\right) \left(t_1 \begin{pmatrix} 2xy \\ x^2 + 3y^2 \end{pmatrix} + t_2 \begin{pmatrix} 3x^2 + y^2 \\ 2xy \end{pmatrix}\right) \qquad \text{(equation 5)}$$

where $\mathbf{p}$ = (x, y). Typically, $l$ = 2, which means that the factor on the left-hand side of the defining distortion expression side is trivial (i.e., equals 1). It should be noted that from $n(\mathbf{s})$ the point $\mathbf{s} \in \mathbb{R}^3$ can only be reconstructed up to scale as $\lambda\mathbf{s}$ for an unknown $\lambda \in \mathbb{R}$. That is, any point on that ray passing through the camera center is mapped on the same pixel. As the distortion function takes merely the $\pi(\mathbf{s})$ as input, it has no access to the distance of $\mathbf{s}$ on the ray. The distortions of the generalized pinhole camera can thus be called distance independent.

Crucial to the observations so far is the note that the direct optical path (not pictured) without displacement by a windshield plane 1 from a space point $\mathbf{s}$ to its imager point is given by a ray from $\mathbf{s}$ passing through the origin of the camera's local coordinate system and intersecting the $z$ = 1-plane. In the latter is a shift within the plane, given by the distortion function $d$. From the result of the shift, the first-order optics maps from the plane to the pixel coordinates in the image.

It should be recalled that camera calibration refers to the problem of estimating the camera parameters by observing images of objects in the world. The state of the art comprises camera calibration methods which are based on detecting point features of an object with known geometry, for example a checkerboard with checkerboard corners. The observed object is referred to as a calibration target. A camera calibration method is called a volume calibration, if the calibration target extends in all three directions in space. If the calibration target comprises only a plane, the method is called plane calibration.

A camera model $k : \mathbb{R}^3 \times \mathbb{R}^d \to \mathbb{R}^2$ is considered. For the purpose of calibration, a target with $n$ accurately known points $\mathbf{s}_1, ..., \mathbf{s}_n \in \mathbb{R}^3$ is put into a reference pose. The image points $\mathbf{p}_1, ..., \mathbf{p}_n$ are the projections of the $s_i$ respectively. In other words, there is a $\boldsymbol{\theta} \in \mathbb{R}^d$ such that the functional model

$$\mathbf{p}_i = k(\mathbf{s}_i, \boldsymbol{\theta}) \qquad \text{(equation 6)}$$

is satisfied. That is, if the model is correct and there is no noise, the projection of the space points is perfectly described by the camera model.

In practice, the perfect feature points $\mathbf{p}_i$ will not be observed, as the detection of the features is subject to noise. It is assumed that instead of $\mathbf{p}_i$, the points

$$c_i = \mathbf{p}_i + \Delta_i \qquad \text{(equation 7)}$$

are observed, where $\Delta_i$ are identically and independently distributed Gaussian random variables with zero mean and covariance matrix

$$\Sigma = \sigma^2 \begin{pmatrix} 1 & 0 \\ 0 & 1 \end{pmatrix}.$$

(equation 8)

Here, $0 < \sigma \in \mathbb{R}$ is called the noise level of the feature detector. That is, each feature point is detected slightly incorrectly but, in total, accurately on average and with the same statistical properties as the other features.

By substitution of equation (6) to equation (7), the statistical model emerges to

$$\mathbf{c}_i = k(s_i, \boldsymbol{\theta}) + \boldsymbol{\Delta}_i.$$

(equation 9)

The task of camera calibration can be seen in estimating $\theta$ and the deviations of $\Delta_i$ of the observed points to the true ones. When stacking all the observed feature points $\mathbf{c}_i$ one by one to a vector $\mathbf{c} = (\mathbf{c}_1,...,\mathbf{c}_n)$, the probability density function of $\mathbf{c}$ is given by

$$p_\theta(\mathbf{c}) = c \exp\left(-\frac{1}{2\sigma^2} \sum_{i=1}^{n} ||\mathbf{c}_i - k(\mathbf{s}_i, \boldsymbol{\theta})||^2\right)$$
$$= c \exp\left(-\frac{1}{2\sigma^2} \sum_{i=1}^{n} ||\boldsymbol{\Delta}_i||^2\right).$$

(equation 10)

where $c \in \mathbb{R}$ is a suitable normalization constant. A maximum likelihood estimator of $\theta$ maximizes the probability of having the parameters $\theta$ given the observations $\mathbf{c}$. Such estimators are given as minimizers of the log-likelihood function

$$l(\boldsymbol{\theta}) = \sum_{i=1}^{n} ||\mathbf{c}_i - k(\mathbf{s}_i, \boldsymbol{\theta})||^2 .$$

(equation 11)

The non-linear minimization problem above is solved by standard tools in practice, like the Levenberg-Marquardt method.

Any minimizer of equation (11) is said to be the result of the camera calibaration procedure. Calibration setups are typically chosen in a way that there exists an initial guess of $\theta$, which lies in a sufficiently small neighbourhood of the true solution. Moreover, typically multiple minimizers do not occur in that neighbourhood of the true solution. Any value of $\theta$, including the minimizers of equation (11), implicitly gives the error residuals $\Delta_i$ as

$$\boldsymbol{\Delta}_i = \mathbf{c}_i - k(\mathbf{s}_i, \boldsymbol{\theta})$$

(equation 12)

The quality of the minimizer $\theta$ and, hence, of the calibration result, is typically assessed by the goodness of fit measure $l(\theta)$. Also, the Root Mean Squared Error (RMSE)

$$\text{RMSE}(\boldsymbol{\theta}) = \sqrt{l(\boldsymbol{\theta})/2n}$$

(equation 13)

is an estimator of the noise level $\sigma$. Since, in turn, the latter can be measured by different means, for example by observing deviations of detected corners in subsequent images of the same setup, the calibration procedure can be tested for its correctness by comparing RMSE($\theta$) and the previously estimated noise level $\sigma$.

The most frequently applied state of the art approach to treat windshields for ADAS applications is simply to ignore the windshield. Low RMSE-values have been demonstrated when calibrating a camera without and through a windshield. In such experiments the camera is typically non-rigidly coupled to the windshield. That is, the windshield is inserted manually between the target and the camera during the experiment in laboratory conditions. However, the camera can be calibrated directly behind the windshield of the vehicle as well for the above sketched approaches. Low RMSE-values are taken as an argument not to consider the windshield at all. Moreover, the effects of windshield distortions can decrease with the distance to the objects in the scene. The above arguments appear to provide a solid basis for ignoring the effects of the windshield.

To address the windshield distortion estimation for stereo rectification algorithms, some methods have been proposed. One basic assumption introduced by these methods is that there exists an image transformation which compensates the windshield distortion. If this transformation is additionally assumed sufficiently smooth, the transformation can, to a first approximation, be represented by a polynomial over the camera's images. The parameters of the distortion maps can be statically estimated, say by a carpet measurement on the ground plane, or dynamically during driving.

However, the effects of the windshield are distance dependent, even to a first approximation. More precisely, it is still true that for a fixed image pixel the space points projected to that pixel lie on a ray in the world coordinate system to a first approximation. However, the entirety of such rays for all pixels do not intersect or pass through the camera center in general. That is, for a fixed image pixel the amount of distortion correction in the image depends on the distance to the object mapped to this pixel.

Summarizing the above, the basic assumptions of previous approaches do not hold: There is simply no image transformation, which perfectly rectifies the windshield distortions. In turn, any approach utilizing this assumption is merely an approximation. Moreover, there is no parametrisation of the generalized pinhole camera model to adopt to the windshield. Consequently, there is a need for a more indepth solution, if high accuracy requirements are imposed on the application of the camera model.

However, in the past five years, bad performance of stereo rectification algorithms was encountered for a wide class of commercial vehicle windshields. Stereo rectification algorithms typically involve feature based minimization of the epipolar constraint. The root causes for the bad performance were traced back to influences of windshields for object features at narrow distances. In other words, whereas the windshield distortions might not affect features of objects at far distances - thus not contradicting the above arguments - they can severely obscure processes involving near objects, like the street surface.

Latter has been shown to be responsible for the complete shutdown of ADAS systems in practice. It is therefore to be expected that the same will be encountered in the future for mono or multi camera applications with high accuracy requirements, like dense structure from motion. It is an objective for the present invention, to provide a method and an apparatus which minimizes or removes these destructive effects.

The document WO 2015/133414 A1 is related to a calibration method for a photographic device that photographs an object through a transparent body. The calibration method includes: acquiring a first photographic image by photographing the object without interposing the transparent body and acquiring a second photographic image by photographing the object through the transparent body.

Summary of the invention

The present invention solves the problem by the methods according to claims 1 and 14 and the ADAS system according to claim 11. The dependent claims are directed at improvements that are also part of the invention.

One aspect of the invention is directed at a method for calibration of a camera-based system of a vehicle including a windshield pane, the method comprising the steps of placing an imaging target in form of board with a known pattern in the field of view of a camera of the camera based system, such that the camera can acquire a calibration image of the board through the windshield pane, acquiring a calibration image of the board with the camera, comparing the calibration image to the known pattern, calculating a windshield distortion which is introduced by the windshield pane, and storing the windshield distortion in the camera-based system.

Advantageously, this method does not require the acquisition of an image of the calibration target without the windshield pane in place. Instead, because of the newly developed mathematical framework presented below, the knowledge of the pattern, preferably a checkerboard pattern, is sufficient to allow the calculation of the windshield distortion, i.e. the distortion that is introduced by the windshield. Later, by inversion of the windshield distortion, and by triangulation of multiple images, the location of points in space projected onto the image may be reconstructed. This will be explained in more detail in the context of the exemplary embodiments.

In particular, the method relies on comparison only of the acquired image with the known pattern, and does not rely on a second image that was taken without the windshield pane in place. Also, the windshield distortion, which may be referred to as windshield distortion component $h$, is an bijective and thus invertible transformation, that allows for application of the inverse procedure to projection. With a camera calibrated this way, an approximation of the optical rays that are projected to a pixel, i.e. a location on the image, is made possible.

The calculation is based on a novel physically motivated camera model and a calibration method for compensation of windshield distortions. The adjustment of the parameters for distortion compensation is carried out statically, as opposed to a dynamic compensation during the life time of the vehicle. Therefore, the new model is referred to as a model for compensation of static windshield distortions.

The method may be based on a model which represents a distant independent approximation of the windshield distortion. The distortion may be represented by the equations described below, for example equation (30) or equation (43), or by their respective inversions.

An aspect of the invention is directed at a method for calculating the total distortion of the camera-based system approximately as the sum of the radial distortion and tangential distortion and the windshield distortion, and storing the total distortion of the camera-based system in the camera based system.

The distortion is then referred to as being a distant independent approximation. This way, the new model is easily allowed to be integrated into existing automotive software solutions.

One aspect of the invention is directed at a new calibration method, which utilizes a simple checkerboard setup to estimate the static windshield parameters in a laboratory and in the vehicle from a small set of windshield samples.

As part of the invention, a new theoretical approach is introduced to address new windshield, or optics, types in the future.

Another aspect of the invention is directed at an apparatus providing a mechanical setup for calibration of the windshield parameters. The physical parameters are preferably the tilt and / or the refractive index and / or the thickness of the windshield, especially preferably all of these parameters combined.

Preferably, only exactly one image is acquired by the camera, which is less demanding in terms of time and effort invested by the manufacturer of the camera based system.

The new model significantly extends older camera models from the state of the art and approaches to explain the effects of the windshield. In contrast to the state of the art, the approach according to the invention comprises an extension of the generalized pinhole camera model, which is physically motivated. In particular, as an instance of the new approach, physical windshield parameters are obtained, like tilt, thickness, and refraction index within the new model. On the other hand, the new special model, e.g. for low curvature windshields, significantly specializes existing works. The new model may introduce dependency of projection on the distance of the scene points.

For a better understanding, a physically motivated model of the optical path from a space point to it's pixel location on the imager shall be derived, which shall be understood as an exemplary embodiment of the present invention. To this purpose, several additional assumptions are introduced.

The optical path of light dispersion is modelled with ray polygons. Moreover, several basic assumptions for the light dispersion are imposed. Besides the $z = 1$-plane, an additional fixed plane in the local coordinate system of the camera is introduced. This plane is referred to as the windshield plane. It should be noted, however, that latter is only for convenience; more planes can be introduced depending on the problem. Moreover, the introduced plane is not required to necessarily represent the windshield in any sense.

It shall now be specified how light paths pass the planes and how they are modified during this. In the model that motivated the present invention, a polygon segment intersecting a plane is allowed to shift along the plane. The light path from a space point to the image is changed this way from a ray to a polygon. A light path starting in a space point passes the windshield plane 1 first. It is required, as a further assumption, that the final polygon segment passing through the $z = 1$-plane has to be incident to the camera center. With that, the first-order optics and the distortions are left unchanged, as with the generalized pinhole camera model.

A sketch of the approach for two planes is given by **Figure 1.** The windhshield pane is denoted with the reference numeral 1. Lens systems can be modelled by chains of planes in commercial optical system simulations. In the state of the art, these planes are parallel to each other and to the imager plane. For the purpose of the invention, however, this rule is not followed. As explained, the previously introduced generalized camera model is a simple instance of such an approach. To observe this, as a special case no shift at all at the windshield plane 1 shall be considered. The purpose of the camera model is, as mentioned above, to explain how a point in space is mapped to a point in the image. In this regard, a new camera model $w : \mathbb{R}^3 \times \mathbb{R}^m \to \mathbb{R}^2$ is introduced. For this a fixed space point $\mathbf{r} \in \mathbb{R}^3$ is considered.

Consider furthermore $\mathbf{s} = (s_x, s_y, s_z) \in \mathbb{R}^3$ with

$$\mathbf{s} = m(\mathbf{r}, \boldsymbol{\theta}) \qquad\qquad\qquad \text{(equation 14)}$$

in the local coordinate system of a camera. The corresponding optical path crosses the z = 1-plane in the point $\mathbf{u} = (u_x, u_y, 1) = (\mathbf{p}, 1) \in \mathbb{R}^3$ with $\mathbf{p} = (u_x, u_y)$. This write-up perfectly corresponds to **Figure 1.** As the direction of the light path is not changed by the additional plane, the path equation can be written down as

$$\mathbf{s} + \lambda\mathbf{u} + \delta(\mathbf{s}, \mathbf{u}) + \beta\mathbf{u} = 0, \qquad\qquad \text{(equation 15)}$$

where $\delta : \mathbb{R}^3 \times \mathbb{R}^3 \to \mathbb{R}^3$ is the shift of the point along the windshield plane 1. The shift along the plane depends on $\mathbf{s}$ and $\mathbf{u}$. The task for the camera model is to solve equation (15) for $\mathbf{u}$ (and $\lambda$ and $\beta$) in dependency on $\mathbf{s}$. Once solved, the corresponding pixel can be defined as

$$w(\boldsymbol{r},\boldsymbol{\theta}) = p(d(\mathbf{p},\boldsymbol{\theta}),\boldsymbol{\theta}). \qquad \text{(equation 16)}$$

In the above generality, equation (15) can not be expected to have a closed form solution. In fact, it can not be expected for equation (15) to have a solution at all, which satisfies all requirements. In the following, it is discussed how the generalized pinhole camera equations can be adapted in the positive case. Consecutively, a particular case is discussed, where the existence can be shown.

A function $u : \mathbb{R}^3 \to \mathbb{R}^3$ is assumed, which solves equation (15) in the following sense. For each choice of $\mathbf{r}, \mathbf{s} \in \mathbb{R}^3$, as discussed above, there exist $\lambda, \beta \in \mathbb{R}^3$ with

$$\mathbf{s} + \lambda u(\mathbf{s}) + \delta\big(\mathbf{s}, u(\mathbf{s})\big) + \beta u(\mathbf{s}) = 0. \qquad \text{(equation 17)}$$

Since the last component of u(s) = ($u_x(\mathbf{s})$, $u_y(\mathbf{s})$,1) is constantly 1, it is now easy to see that

$$\lambda + \beta = -\mathrm{s}_z - \delta_z(\mathbf{s}, u(\mathbf{s})). \qquad \text{(equation 18)}$$

Latter means that the two implicit equations

$$s_x - \Big(s_z + \delta_z\big(\mathbf{s}, u(\mathbf{s})\big)\Big) u_x(\mathbf{s}) + \delta_x(\mathbf{s}, u(\mathbf{s})) = 0,$$
$$s_y - \Big(s_z + \delta_z\big(\mathbf{s}, u(\mathbf{s})\big)\Big) u_y(\mathbf{s}) + \delta_y(\mathbf{s}, u(\mathbf{s})) = 0 \qquad \text{(equations 19)}$$

have to be solved.
Noteworthy, these are similar equations to the Direct Linear Transform (DLT) approach to camera calibration. Equations (19) can be written in a more convenient form as

$$u_x(\mathbf{s}) = \frac{s_x + \delta_x(s, u(s))}{s_z + \delta_z(s, u(s))},$$
$$u_y(\mathbf{s}) = \frac{s_y + \delta_y(s, u(s))}{s_z + \delta_z(s, u(s))}. \qquad \text{(equations 20)}$$

The latter form does not bring any insights for solving equations (19). However, it can be observed that for shift $\delta$ being entirely the zero vector, equations (20) simplify to the central projection equations given by $\pi$. In other words, however $\delta$ looks like in a particular case, this model is a generalization of the central projection.
With the above preparations, the generalized central projection

$$\phi(\mathbf{s},\boldsymbol{\theta}) = (u_x(\mathbf{s}), u_y(\mathbf{s})) \qquad \text{(equation 21)}$$

is introduced. It has not yet been shown that such u exists at all. The projection $\phi$ is inherently parameteric, as it introduces properties of the windshield into the projection property of the camera. The generalized windshield camera model amounts then to

$$w(\mathbf{s},\boldsymbol{\theta}) = p(d(\phi(m(\mathbf{s},\boldsymbol{\theta}),\boldsymbol{\theta}),\boldsymbol{\theta}),\boldsymbol{\theta}). \qquad \text{(equation 22)}$$

The new parameters of $\phi$ are referred to as the windshield parameters.
It remains now to show, how to define the new projection function $\phi$ in practice. Before doing this, however, distance dependency is elaborated in the following.
Already with the tools introduced so far, the notion of distance dependency of the model can be substantiated. To this purpose, an $\mathbf{s} \in \mathbb{R}^3$ and the corresponding $\mathbf{u} = u(\mathbf{s}) \in \mathbb{R}^3$ is fixed. For $\lambda \in \mathbb{R}$, the points

$$s(\lambda) = s + \lambda \mathbf{u} \qquad \text{(equation 23)}$$

as introduced by **Figure 1** shall be considered. It can be seen that every $s(\lambda)$ is projected to the point **p** on the $z = 1$-plane. As explained, rectification essentially tries to find a deformation of the image or the imager $z = 1$-plane in order to treat the optical system as a pinhole camera. More precisely, it is required that all points in space (which form a set of points in space lying on a virtual line), which are projected to **p,** are projected to the same point $\mathbf{q} \in \mathbb{R}^2$ by the central projection. If one now tries to obtain such a rectified point **q** of **p** on the $z = 1$-plane, any such **q** would imply for a suitable $\lambda \neq 0$ that

$$\mathbf{q} = \pi(s(0)) = \pi(s) = \pi(s(\lambda)) = \pi(s + \lambda \mathbf{u}) . \qquad \text{(equation 24)}$$

By observing the part $\pi(s) = \pi(s + \lambda \mathbf{u})$, it can be seen that

$$\frac{s_x}{s_z} = \frac{s_x + \lambda u_x}{s_z + \lambda} \quad \text{and} \quad \frac{s_y}{s_z} = \frac{s_y + \lambda u_y}{s_z + \lambda}. \qquad \text{(equations 25)}$$

It is easy to see that latter equations imply

$$u_x = \frac{s_x}{s_z} \quad \text{and} \quad u_y = \frac{s_y}{s_z} \quad . \qquad \text{(equations 26)}$$

It should be recalled that **u** = (**p**, 1). That is, the existence of a rectifying point implies **p** = **q.** Latter can occur for all pixels only if the windshield has no influence in the sense that the newly introduced projection $\phi$ is exactly the central projection $\pi$. Consequently, the inventors found out that image rectification in the common sense to a pinhole camera is not possible for windshield effects within the new model in the above sense.

As one easily recognizes from the above, the camera calibration procedures merely use the projection property of the camera. In other words, depth dependency as described above is not an issue for such methods. As mentioned in the introduction, however, ADAS application software applies the inverse procedure to projection. Depth dependency in the above sense poses at first glance a challenge, when it comes to extending existing software solutions by the new model. Fortunately, there is an approximation of the general model, which approximates an image transformation introduced by the scene and, hence, admits inverse projection.

Consequently, one aspect of the invention is directed at a method of calibrating a camera-based system of a vehicle - preferably an ADAS system - comprising the steps of acquiring an image with the camera, and then calculating, using the windshield distortion, the set of points in space that is projected to a location on the image. This can be seen as the inverse procedure to projection.

The following is a transformation of equations (20) based on partial fractional decomposition:

$$u_x = \frac{s_x}{s_z} + \frac{s_z \delta_x(s, u(s)) - s_x \delta_z(s, u(s))}{s_z(s_z + \delta_z(s, u(s)))} \qquad \text{(equation 27)}$$

An analogous equation can be introduced for the $u_y(s)$ component. The right-hand side of the resulting term once again shows that the model is a generalization of the central projection. Again, from $\frac{s_x}{s_z}$ and $\frac{s_y}{s_z}$ the space point **s** can only be reconstructed up to scale. However, in its role for the windshield distortion, it is sufficient to approximate **s** by a point in the same direction at a certain distance. To this purpose, a $z \in \mathbb{R}$ is fixed. With the above preparations, equation (27) can be approximated as

$$u_x \approx \frac{s_x}{s_z} + \frac{v_z \delta_x(v, u(v)) - v_x \delta_z(v, u(v))}{v_z(v_z + \delta_z(v, u(v)))}, \qquad \text{(equation 28)}$$

where v = ($v_x$, $v_y$, $v_z$) denotes

$$\mathbf{v} = z\left(\frac{s_x}{s_z}, \frac{s_y}{s_z}, 1\right). \qquad \text{(equation 29)}$$

An analogous expression results for the $u_y(\boldsymbol{s})$ component. Notably, the right-hand side expression of equation (28) merely depends on $\mathbf{p} = \pi(\boldsymbol{s})$. In other words, it is a depth independent approximation to the general model. That is, with the above approximation, it is possible to shift the complete right-hand side to the distortion function. With the above notation, a new windshield distortion component $h : \mathbb{R}^2 \rightarrow \mathbb{R}^2$ can be introduced with

$$h(\mathbf{p}) = \Big(v_z\big(v_z + \delta_z(\mathbf{v}, u(\mathbf{v}))\big)\Big)^{-1} \begin{pmatrix} v_z\delta_x(\mathbf{v},u(\mathbf{v})) - v_x\delta_z(\mathbf{v},u(\mathbf{v})) \\ v_z\delta_y(\mathbf{v},u(\mathbf{v})) - v_y\delta_z(\mathbf{v},u(\mathbf{v})) \end{pmatrix} \qquad \text{(equation 30)}$$

where $\mathbf{v} = z(\mathbf{p},1)$, as above. With equation (30), the approximate windshield camera model writes as

$$w'(\mathbf{s}, \boldsymbol{\theta}) = p(d'(\pi(m(\mathbf{s}, \boldsymbol{\theta})), \boldsymbol{\theta}), \boldsymbol{\theta}), \qquad \text{(equation 31)}$$

where $d'=r+t+h$ with radial distortions $r$ and tangential distortions $t$, as introduced before. Noteworthy, the above approximate model is merely a restriction of the full model, which works perfectly for objects at the distance $z$ and degrades gradually, when the real coordinate $s_z$ moves away from $z$.

In particular, the total distortion of the camera-based system is yielded as composition - preferably a sum - of a radial distortion of the camera and a tangential distortion of the camera and the windshield distortion introduced by the windshield.

In this way, the newly developed windshield distortion component $h$ can easily be introduced into currently available ADAS systems .

One aspect of the invention consequently regards a model for calibration of a camera-based system, where each set of points which are mapped on a single image location lies on a straight (virtual) line, where all the straight lines intersect in a single point, being the pinhole of the camera according to the pinhole model. The set of points here may refer to the points $\mathbf{v}$ according to equation 29.

Consequently, one further aspect of the invention is directed at a method for image rectification, where the set of points that is projected on a single location in the image is calculated by applying the windshield distortion - which was introduced onto an acquired image of a target in a fixed distance $z$ - on all points $\mathbf{v}$ in any distance $s_z$.

For the purpose of rectification, the complete 3D location of an object can be determined by triangulation using at least two images acquired at different locations. These images can be acquired by a single moving camera, or by a stereo camera system comprising two cameras that are preferably oriented parallelly to each other.

Now, as further step, additional realistic assumptions are made, with which windshields with low curvature can be modelled. This allows to solve equations (17) and to specify the function $u$ in closed form. Latter is a further important contribution of the invention at hand. The corresponding set of assumptions is referred to as low curvature windshields. Practically, it is assumed that the windshield consists of two parallel surfaces with air outside and a medium, typically glass, inside. This model can be called a flat glass model as well.

A sketch of this model is presented in **Figure 2,** which shows a physically motivated low curvature windshield model, where the optical ray is shifted along the glass surface.

The refraction on this model is governed by Snell's law. $v$ with $0 < v \in \mathbb{R}$ is the refraction index of the medium. $\theta, \gamma \in \mathbb{R}$ are the angles of incidence of the incoming and emerging ray, and the angle of the refracted ray within the medium respectively. The angles are all measured with respect to the surface normal, which is uniquely defined up to sign. Then the angles at the point of first refraction relate with

$$\sin(\theta) = v\sin(\gamma). \qquad \text{(equation 32)}$$

The second refraction introduces

$$\sin(\gamma)\,v \;=\; \sin(\theta). \qquad\qquad \textbf{(equation 33)}$$

In other words, the transmission of a light ray through the windshield does not change the ray's direction. The ray is merely shifted along the surface of the windshield. That is, the assumption of a shift along the plane is entirely motivated by optics. Equivalently to the physical model, the shift is performed only on one of the surfaces, in particular on the incident surface.

From **Figure 2** it can be seen that $r/t = \tan(\gamma)$ and

$$\tan(\theta) = \frac{h+r}{t} = \frac{h}{t} + \frac{r}{t} = \frac{h}{t} + \tan(\gamma). \qquad\qquad \textbf{(equation 34)}$$

Latter gives the length of the shift in dependency on the incidence angle $\theta$ and refraction angle $\gamma$ as

$$h = t(\tan(\theta) - \tan(\gamma)). \qquad\qquad \textbf{(equation 35)}$$

The following deals with technical details of obtaining an explicit formula for the generalized central projection in equation (21). From here on there are multiple ways to proceed, each resulting in a slightly different result.

For ADAS applications, the windshield is typically pitched with respect to the viewing direction of the camera. Other angles appear insignificant compared to the pitch. Optical paths enter the windhield at different directions **u. Figure 2,** however, shows only a cross section of the corresponding shift along **u.** When modelled accurately, the shift occurs in the orthogonal projection direction of **u** to the windhield surface. Latter behaviour can be approximated by assuming that the shift occurs only in the direction parallel to the optical axis of the camera. More precisely, it is assumed that

$$\delta(\mathbf{s},\mathbf{u}) \approx (0,\,\sin(\tau),\,\cos(\tau)). \qquad\qquad \textbf{(equation 36)}$$

In other words, the windshield plane models the physics of a flat glass model pitched with respect to the local camera coordinate system by $\tau$.

Consequently, one aspect of the invention is directed at a method of calibrating a camera-based system, where the windshield distortion is calculated by approximating that the distortion of rays through be windshield occurs only in the plane that is constructed by the optical axis of the camera and the vertical axis. "Vertical" means the direction of gravity.

This allows for otherwise unavailable analytical solutions to the distortion.

Summarizing the above, equations (20) turn to the following

$$u_x = \frac{s_x}{s_z + h\cdot\cos(\tau)},$$
$$u_y = \frac{s_y + h\cdot\sin(\tau)}{s_z + h\cdot\cos(\tau)}. \qquad\qquad \textbf{(equations 37)}$$

The next step is to apply narrow angle approximations, to get rid of trigonometric functions in the definition of $h$ and $\theta$. Therefore, $\sin(x)$, $\tan(x)$, and $\tan^{-1}(x)$ are approximated by $x$, whenever required. In particular, from equation (32) with the above approximation it is obtained that

$$\gamma \approx \theta/v. \qquad\qquad \textbf{(equation 38)}$$

Furthermore,

$$h \approx t(\theta - \gamma) \approx t\left(\theta - \frac{\theta}{v}\right) = t\cdot\theta\left(1 - \frac{1}{v}\right). \qquad\qquad \textbf{(equation 39)}$$

Consequently, one aspect of the invention is directed at a method of calibrating a camera-based system, where the windshield distortion is calculated by approximating the sine of an angle $\theta$ between a ray from a point on the calibration target to a point on the windshield pane and the normal on that point to the windshield pane with that angle $\theta$. This allows for an otherwise unavailable method of calibration and rectification, as shown below.

Finally, the incidence angle is approximated. An accurate description gives

$$\frac{\pi}{2} = \tau + \theta + \tan^{-1}(u_y).$$

(equation 40)

Latter gives approximately

$$\theta = \frac{\pi}{2} - \tau - \tan^{-1}(u_y) \approx \frac{\pi}{2} - \tau - u_y \quad.$$

(equation 41)

Substitution of the latter into second equation (37) yields

$$u_y \left( s_z + t \cdot \left( \frac{\pi}{2} - \tau - u_y \right) \left( 1 - \frac{1}{v} \right) \cos(\tau) \right)$$
$$= s_y + t \cdot \left( \frac{\pi}{2} - \tau - u_y \right) \left( 1 - \frac{1}{v} \right) \sin(\tau).$$

(equation 42)

It is easily observed that equation (42) admits two closed form solutions for $u_y$, namely

$$u_y = (b \pm \sqrt{b^2 - 4ac})/(2a),$$

(equation 43)

subject to a $a \neq 0$ and $b^2 - 4ac \geq 0$ or $a = 0$ and $b \neq 0$, where

$$a = (1 - v)\, t \cos(\tau),$$
$$b = (v - 1)\, t \sin(\tau) + ((1 - v)t\tau + (\frac{\pi}{2}v - \frac{\pi}{2})t) \cos(\tau) + vs_z,$$
$$c = \left( (v - 1)\, t\tau + \left( \frac{\pi}{2} - \frac{\pi}{2}v \right) t \right) \sin(\tau) - vs_y.$$

(equations 44)

Once a solution is found for $u_y$, substitution of $u_y$ into the first equation (37) yields the explicit solution for $u_x$ and $u_y$ that was searched for.

Thus, one aspect of the invention relates to a method of storing in the camera-based system a mapping of a point in space and of physical parameters of the windshield pane to locations on an calibration image acquired with the camera.

Also the inversion of said mapping may be stored, i.e. a mapping of locations on an image acquired with the camera and of physical parameters of the windshield to a sets of points in space, where this transformation depends on the calculated windshield distortion. This mapping is given by an inversion of the above equations, which may or must be carried out numerically in practice.

Advantageously, this allows for an analytically precise modelling and rectification of the distortion introduced by a windshield pane with the respective physical parameters.

The following can be noted from the above equations: From the physical properties of glass, it can be assumed that $t \neq 0$, $v \neq 1$, and $\tau \neq \pi/2$, so $a \neq 0$. Subject to that, equation (43) shows to have two solutions in practice, from which one always appears to be infeasible. Finally, in the case $t = 0$ or $v = 1$, the equations have the solution $u_y = \frac{s_y}{s_z}$.
Latter means, that the approximation is correct in the sense, that it yields the expected result of central projection in the case, where there is no windshield.

The invention also relates to an apparatus for compensation of static image distortions introduced by a windshield for an ADAS camera. In the following it will be shown, how the new parameters of the windshield can be estimated and applied, besides the exemplary embodiments described hereinbefore, in practice. A setup for plane calibration can be transformed to a method for windshield calibration.

One assumption may be that a camera is provided, which is intrinsically calibrated elsewhere. Moreover, multiple windshields are provided, to which the particular camera can be attached subsequently. The windshields can be placed in a stand or directly in the vehicle.

**Figure 3** shows an embodiment of the invention where a single-plane target 2 is is put in front of the camera (not pictured). The target contains a regular pattern, for example with checkers, from which one middle section 5 has a special form to be easily recognized. The target is placed in a way that the pattern covers the entire image of the camera.

Pictured is an apparatus for calibration of a camera-based system - not shown in detail - of a vehicle 3 including a windshield pane (not pictured). The apparatus in this case comprises a vehicle with a windshield pane which is installed in the windshield bracket of the vehicle. A camera - not explicitly shown - that is preferably mounted on the backside of an inside rear mirror (not pictured) is facing the windshield pane from a first side, being inside the vehicle 3, and a target 2 in form of board with a known pattern 4 is mounted in a fixed distance $z$ (not explicitly marked) on the other side (outside of the vehicle) of the windshield inside a field of view of the camera, such that the camera can acquire an image of the target 2 through the windshield. The vehicle also includes a computing unit (not shown) which comprises program code which, when run by the computing unit, executes a method as described above.

Advantageously, this allows for the first time for calibration of a camera inside the vehicle 3 instead of inside a dedicated optical setup, i.e. inside a laboratory.

The calibration procedure can be carried out in standard manner with the new model in equation (22), as explained previously. Here, however, the intrinsic parameters of the camera may be treated as constants to retain ambiguity. In particular, the parameters of the windshield are estimated along with the extrinsic parameters.

By estimating the windshield parameters for a sufficiently large set of cameras and windshields, a statistical analysis shows if the average of the windshield parameters can be used for the complete batch of windshields of the same model.

Noteworthy, the calibration can be performed at relatively narrow distances. In such distances, the effects of windshield distortions are more pronounced. Consequently, the calibration of the windshield parameters is well applicable in this case.

The proposed setup can be applied to estimate the average windshield parameters for a set of a number of similar windshields for a vehicle. For example, one stereo camera can be used and the windshield parameters for the left and for the right optic modules of the camera can be estimated separately. The average windshield parameters estimated for each optic module separately can then be applied to compensate the windshield distortions on a recorded test driving sequence.

For this purpose, an implementation of the model presented previously can be applied. As shown in **Figure 3,** the windshield can be kept in a stand at approximately 30 degrees to the target. The camera can be mounted to the windshield in the vehicle bracket on the windshield. The optical axis of the camera can be oriented approximately perpendicular to the target. With the above setup, the windshield calibration parameters for one of the optic modules can be obtained. These parameters can preferably be - but are not limited to - the tilt $\tau$, the thickness $t$ and/or the refraction index $v$ of the windshield pane.

Thus, the invention also comprises a method of determining physical parameters of the windshield pane by interpreting the windshield distortion.

From the corresponding raw measurements, it can be concluded that the averaged parameters can be used approximately for any of the windshields of the same form. Also, it could be checked that the windshield panes do not differ in their parameters.

Surprisingly, it was found that the values of tilt, thickness, and refraction index that are determined in this way are often close to the physically measurable values for the particular class of windshields. As approximations have been used to develop the previously discussed formulas, this is by no means expected or required to be the case for the new model.

## Claims

1. Method for calibration of a camera-based system of a vehicle with a windshield pane, the method comprising the steps of
   placing an imaging target in form of a board with a known pattern in the field of view of a camera of the camera based system, such that the camera can acquire an calibration image of the board through the windshield pane,
   acquiring exactly one calibration image of the board with the camera,
   comparing the calibration image to the known pattern,
   calculating a windshield distortion which is introduced by the windshield pane, using a camera model comprising parameters representing distortion properties of the windshield, wherein the intrinsic parameters of the camera are known, and
   storing the windshield distortion in the camera-based system.

2. Method according to claim 1, comprising the steps of
   calculating a total distortion of the camera-based system as composition of a radial distortion of the camera and a tangential distortion of the camera and the windshield distortion, and

storing the total distortion of the camera-based system in the camera based system.

3. Method according to any of the previous claims, wherein calculating the windshield distortion comprises approximating a sine of an angle between a ray from a point on the calibration target to a point on the windshield pane and a normal on that point to the windshield pane with that angle.

4. Method according to any of the previous claims, wherein calculating the windshield distortion comprises approximating that the distortion of rays through the windshield pane occurs only within a plane that is constructed by an optical axis of the camera and a vertical axis.

5. Method according to any of the previous claims, where the windshield distortion is given by $h = (h_x, h_y) = (v_z(v_z + \delta_z(\mathbf{v}, u(\mathbf{v}))))^{-1} (v_z\delta_x(\mathbf{v}, u(\mathbf{v})) - v_x\delta_z(\mathbf{v}, u(\mathbf{v})), v_z\delta_y(\mathbf{v}, u(\mathbf{v})) - v_y\delta_z(\mathbf{v}, u(\mathbf{v})))$ with a shift along a windshield plane $\delta = (\delta_x, \delta_y, \delta_z)$, wherein the windshield plane is an additional fixed plane in the local coordinate system, a projected location on the image $u(\mathbf{v}) = (u_x, u_y, 1)$, a point in space $\mathbf{s} = (s_x, s_y, s_z)$ and a vector $\mathbf{v} = z(s_x/s_z, s_y/s_z, 1)$ and a fixed distance $z = v_z$, wherein the distance z is approximately $s_z$.

6. Method according to claim 1, comprising the step of determining and/or estimating physical parameters of the windshield pane by interpreting the windshield distortion.

7. Method according to claim 6, where the physical parameters are a tilt and / or a refractive index and / or a thickness of the windshield pane.

8. Method according to any of the claims 6 and 7, comprising the step of
storing in the camera-based system a mapping of a point in space and of physical parameters of the windshield pane to locations on an image acquired with the camera.

9. Method according to claim 8, where the mapping includes a transformation $u_y = (b \pm \sqrt{b^2 - 4ac})/(2a)$

$u_y$ with $a = (1 - v)\, t\, \cos(\tau)$, $b = (v - 1)\, t \sin(\tau) + ((1 - v)t\tau + (\frac{\pi}{2}v - \frac{\pi}{2})t) \cos(\tau) + vs_z$,

$c = \left((v - 1)\, t\tau + \left(\frac{\pi}{2} - \frac{\pi}{2}v\right) t\right) \sin(\tau) - vs_y$, with an image location component $u_y$, a space point coordinate $(s_x, s_y, s_z)$, and a refractive index v, a tilt $\tau$ and a thickness t of the windshield pane.

10. Camera-based system for a vehicle comprising a camera and a computing unit, which comprises program code which, when run by the computing unit, executes a method for calibration of the camera-based system by acquiring exactly one calibration image of a board with a known pattern with the camera, comparing the calibration image to the known pattern, calculating a windshield distortion which is introduced by a windshield pane between the camera and the board using a camera model comprising parameters representing distortion properties of the windshield, wherein the intrinsic parameters of the camera are known, and storing the windshield distortion in the camera-based system.

11. Apparatus for calibration of a camera-based system of a vehicle with a windshield pane, comprising a camera-based system according to claim 10, wherein the camera faces the windshield pane from a first side of the windshield pane, the apparatus comprising a board with a known pattern that is mounted in a fixed distance z on a second side of the windshield pane inside a field of view of the camera, such that the camera can acquire an calibration image of the board through the windshield pane.

12. Apparatus according to claim 11 comprising a vehicle with a windshield frame, where the windshield pane is installed in the windshield frame of the vehicle and the camera is mounted inside the vehicle.

13. Method for rectification of images acquired by at least one camera of a camera-based system of a vehicle with a windshield pane, the method comprising the steps of
calibrating the camera-based system using a method according to one of the claims 1-9,
acquiring an image with the camera, and
calculating, using the windshield distortion stored in the camera-based system, a set of points in space that is projected to a location on the image.

**14.** Method according to claim 13, where a 3D location of an object is determined by triangulation using at least two images acquired at different locations.

**15.** Camera-based system comprising a computing unit which comprises program code which, when run by the computing unit, executes a method according to any of the claims 13 und 14.

**Patentansprüche**

**1.** Verfahren zur Kalibrierung eines kamerabasierten Systems eines Fahrzeugs mit einer Windschutzscheibe, wobei das Verfahren die folgenden Schritte umfasst:

Platzieren eines Abbildungsziels in Form einer Platte mit einem bekannten Muster im Sichtfeld einer Kamera des kamerabasierten Systems, derart, dass die Kamera ein Kalibrierungsbild der Platte durch die Windschutzscheibe aufnehmen kann,
Aufnehmen, mit der Kamera, von genau einem Kalibrierungsbild der Platte,
Vergleichen des Kalibrierungsbildes mit dem bekannten Muster,
Berechnen einer Windschutzscheibenverzerrung, die durch die Windschutzscheibe eingeleitet wird, unter Verwendung eines Kameramodells, das Parameter umfasst, die Verzerrungseigenschaften der Windschutzscheibe repräsentieren, wobei die intrinsischen Parameter der Kamera bekannt sind, und
Speichern der Windschutzscheibenverzerrung im kamerabasierten System.

**2.** Verfahren nach Anspruch 1, umfassend die folgenden Schritte:

Berechnen einer Gesamtverzerrung des kamerabasierten Systems als Zusammensetzung aus einer radialen Verzerrung der Kamera und einer tangentialen Verzerrung der Kamera und der Windschutzscheibenverzerrung, und
Speichern der Gesamtverzerrung des kamerabasierten Systems im kamerabasierten System.

**3.** Verfahren nach einem der vorhergehenden Ansprüche, wobei das Berechnen der Windschutzscheibenverzerrung das Approximieren eines Sinus eines Winkels zwischen einem Strahl von einem Punkt auf dem Kalibrierungsziel zu einem Punkt auf der Windschutzscheibe und einer Normale an diesem Punkt zur Windschutzscheibe mit diesem Winkel umfasst.

**4.** Verfahren nach einem der vorhergehenden Ansprüche, wobei das Berechnen der Windschutzscheibenverzerrung das Approximieren umfasst, dass die Verzerrung von Strahlen durch die Windschutzscheibe nur innerhalb einer Ebene auftritt, die durch eine optische Achse der Kamera und eine vertikale Achse konstruiert ist.

**5.** Verfahren nach einem der vorhergehenden Ansprüche, wobei die Windschutzscheibenverzerrung gegeben ist durch

$$h = (h_x, h_y) = (v_z(v_z + \delta_z(\mathrm{v}, u(\mathrm{v}))))^{-1} (v_z\delta_x(\mathrm{v}, u(\mathrm{v})) - v_x\delta_z(\mathrm{v}, u(\mathrm{v})), v_z\delta_y(\mathrm{v}, u(\mathrm{v})) - v_y\delta_z(\mathrm{v}, u(\mathrm{v})))$$

mit einer Verschiebung entlang einer Windschutzscheibenebene $\delta = (\delta_x, \delta_y, \delta_z)$, wobei die Windschutzscheibenebene eine zusätzliche feste Ebene im lokalen Koordinatensystem ist, einer projizierten Position auf dem Bild $u(\mathrm{v}) = (u_x, u_y, 1)$, einem Punkt im Raum $s = (s_x, s_y, s_z)$ und einem Vektor $\mathrm{v} = z(s_x/s_z, s_y/s_z, 1)$ und einem festen Abstand $z = v_z$, wobei der Abstand $z$ ungefähr gleich $s_z$ ist.

**6.** Verfahren nach Anspruch 1, umfassend den Schritt des Bestimmens und/oder Schätzens physikalischer Parameter der Windschutzscheibe durch Interpretieren der Windschutzscheibenverzerrung.

**7.** Verfahren nach Anspruch 6, wobei es sich bei den physikalischen Parametern um eine Neigung und/oder einen Brechungsindex und/oder eine Dicke der Windschutzscheibe handelt.

**8.** Verfahren nach einem der Ansprüche 6 und 7, umfassend den folgenden Schritt:
Speichern, im kamerabasierten System, einer Zuordnung eines Raumpunkts und physikalischer Parameter der Windschutzscheibe zu Positionen auf einem mit der Kamera aufgenommenen Bild.

**9.**

Verfahren nach Anspruch 8, wobei die Zuordnung eine Transformation $u_y = (b \pm \sqrt{b^2 - 4ac})/(2a)$ mit

$a = (1 - v) t\cos(\tau),$ $b = (v - 1)t\sin(\tau) + ((1 - v)t\tau + (\frac{\pi}{2}v - \frac{\pi}{2})t)\cos(\tau) + vs_z,$ $c = ((v - 1)t\tau + (\frac{\pi}{2} - \frac{\pi}{2}v)t)\sin(\tau) - vs_y$ beinhaltet, mit einer Bildpositionskomponente $u_y$, einer Raumpunktkoordinate ($s_x$, $s_y$, $s_z$) und einem Brechungsindex $v$, einer Neigung $\tau$ und einer Dicke $t$ der Windschutzscheibe.

**10.** Kamerabasiertes System für ein Fahrzeug, umfassend eine Kamera und eine Recheneinheit, die Programmcode umfasst, der, wenn er von der Recheneinheit ausgeführt wird, ein Verfahren zur Kalibrierung des kamerabasierten Systems durch Erfassen genau eines Kalibrierungsbildes einer Platte mit einem bekannten Muster mit der Kamera ausführt, Vergleichen des Kalibrierungsbildes mit dem bekannten Muster, Berechnen einer Windschutzscheibenverzerrung, die durch eine Windschutzscheibe zwischen der Kamera und der Platte eingeleitet wird, unter Verwendung eines Kameramodells, das Parameter umfasst, die Verzerrungseigenschaften der Windschutzscheibe repräsentieren, wobei die intrinsischen Parameter der Kamera bekannt sind, und Speichern der Windschutzscheibenverzerrung im kamerabasierten System.

**11.** Vorrichtung zur Kalibrierung eines kamerabasierten Systems eines Fahrzeugs mit einer Windschutzscheibe, umfassend ein kamerabasiertes System nach Anspruch 10, wobei die Kamera der Windschutzscheibe von einer ersten Seite der Windschutzscheibe zugewandt ist, wobei die Vorrichtung eine Platte mit einem bekannten Muster umfasst, die in einem festen Abstand $z$ auf einer zweiten Seite der Windschutzscheibe innerhalb eines Sichtfeldes der Kamera montiert ist, derart, dass die Kamera ein Kalibrierungsbild der Platte durch die Windschutzscheibe aufnehmen kann.

**12.** Vorrichtung nach Anspruch 11, umfassend ein Fahrzeug mit einem Windschutzscheibenrahmen, wobei die Windschutzscheibe im Windschutzscheibenrahmen des Fahrzeugs eingebaut ist und die Kamera im Inneren des Fahrzeugs montiert ist.

**13.** Verfahren zum Korrigieren von Bildern, die von mindestens einer Kamera eines kamerabasierten Systems eines Fahrzeugs mit einer Windschutzscheibe aufgenommen wurden, wobei das Verfahren die folgenden Schritte umfasst:

Kalibrieren des kamerabasierten Systems unter Verwendung eines Verfahrens nach einem der Ansprüche 1-9, Erfassen eines Bildes mit der Kamera, und Berechnen, unter Verwendung der im kamerabasierten System gespeicherten Windschutzscheibenverzerrung, einer Reihe von Punkten im Raum, die auf eine Position im Bild projiziert werden.

**14.** Verfahren nach Anspruch 13, wobei eine 3D-Position eines Objekts durch Triangulation unter Verwendung von mindestens zwei Bildern bestimmt wird, die an verschiedenen Positionen aufgenommen wurden.

**15.** Kamerabasiertes System umfassend eine Recheneinheit, die Programmcode umfasst, der, wenn er von der Recheneinheit ausgeführt wird, ein Verfahren nach einem der Ansprüche 13 und 14 durchführt.

**Revendications**

**1.** Procédé d'étalonnage d'un système basé sur une caméra d'un véhicule ayant une glace de pare-brise, le procédé comprenant les étapes consistant :

à placer une cible d'imagerie sous la forme d'un panneau ayant un motif connu dans le champ de vision d'une caméra du système basé sur une caméra de telle sorte que la caméra puisse acquérir une image d'étalonnage du panneau à travers la glace de pare-brise, à acquérir exactement une image d'étalonnage du panneau avec la caméra, à comparer l'image d'étalonnage avec le motif connu, à calculer une déformation de pare-brise qui est introduite par la glace de pare-brise, à l'aide d'un modèle de caméra comprenant des paramètres représentant des propriétés de déformation du pare-brise, dans lequel les paramètres intrinsèques de la caméra sont connus, et

à stocker la déformation de pare-brise dans le système basé sur une caméra.

2. Procédé selon la revendication 1, comprenant les étapes consistant :

à calculer une déformation totale du système basé sur une caméra en tant que composition d'une déformation radiale de la caméra et d'une déformation tangentielle de la caméra et de la déformation de pare-brise, et à stocker la déformation totale du système basé sur une caméra dans le système basé sur une caméra.

3. Procédé selon l'une quelconque des revendications précédentes, dans lequel le calcul de la déformation de pare-brise consiste à approximer un sinus d'un angle entre un rayon depuis un point sur la cible d'étalonnage jusqu'à un point sur la glace de pare-brise et une normale sur ce point par rapport à la glace de pare-brise avec cet angle.

4. Procédé selon l'une quelconque des revendications précédentes, dans lequel le calcul de la déformation de pare-brise consiste à estimer que la déformation de rayons à travers la glace de pare-brise se produit seulement dans un plan qui est construit par un axe optique de la caméra et un axe vertical.

5. Procédé selon l'une quelconque des revendications précédentes, où la déformation de pare-brise est donnée par
$h = (h_x, h_y) = (v_z(v_z + \delta_z(v, u(v))))^{-1} (v_z\delta_x(v, u(v)) - v_x\delta_z(v, u(v)), v_z\delta_y(v, u(v)) - v_y\delta_z(v, u(v)))$
avec un décalage le long d'un plan de pare-brise $\delta = (\delta_x, \delta_y, \delta_z)$, dans lequel le plan de pare-brise est un plan fixe supplémentaire dans le système de coordonnées locales, un emplacement projeté sur l'image $u(v) = (u_x, u_y, 1)$, un point dans l'espace $s = (s_x, s_y, s_z)$ et un vecteur $v = z(s_x/s_z, s_y/s_z, 1)$ et une distance fixe $z = v_z$, dans lequel la distance $z$ est approximativement $s_z$.

6. Procédé selon la revendication 1, comprenant l'étape consistant à déterminer et/ou à estimer des paramètres physiques de la glace de pare-brise en interprétant la déformation de pare-brise.

7. Procédé selon la revendication 6, où les paramètres physiques sont une inclinaison et/ou un indice de réfraction et/ou une épaisseur de la glace de pare-brise.

8. Procédé selon l'une quelconque des revendications 6 et 7, comprenant l'étape consistant :
à stocker, dans le système basé sur une caméra, une mise en correspondance d'un point dans l'espace et de paramètres physiques de la glace de pare-brise avec des emplacements sur une image acquise avec la caméra.

9. Procédé selon la revendication 8, où la mise en correspondance comprend une transformation
$u_y = (b \pm \sqrt{b^2 - 4ac})/(2a)$ avec $a = (1 - v)t\cos(\tau)$,
$b = (v - 1)t\sin(\tau) + ((1 - v)t\tau + (\frac{\pi}{2}v - \frac{\pi}{2})t)\cos(\tau) + vs_z$,
$c = ((v - 1)t\tau + (\frac{\pi}{2} - \frac{\pi}{2}v)t)\sin(\tau) - vs_y$, avec un composant d'emplacement d'image $u_y$, une coordonnée de point spatiale $(s_x, s_y, s_z)$ et un indice de réfraction $v$, une inclinaison $\tau$ et une épaisseur $t$ de la glace de pare-brise.

10. Système basé sur une caméra pour un véhicule comprenant une caméra et une unité de calcul, qui comprend un code de programme qui, lorsqu'il est exécuté par l'unité de calcul, exécute un procédé d'étalonnage du système basé sur une caméra en acquérant exactement une image d'étalonnage d'un panneau ayant un motif connu avec la caméra, en comparant l'image d'étalonnage avec le motif connu, en calculant une déformation de pare-brise qui est introduite par une glace de pare-brise entre la caméra et le panneau à l'aide d'un modèle de caméra comprenant des paramètres représentant des propriétés de déformation du pare-brise, dans lequel les paramètres intrinsèques de la caméra sont connus, et en stockant la déformation de pare-brise dans le système basé sur une caméra.

11. Appareil d'étalonnage d'un système basé sur une caméra d'un véhicule ayant une glace de pare-brise, comprenant un système basé sur une caméra selon la revendication 10, dans lequel la caméra fait face à la glace de pare-brise depuis un premier côté de la glace de pare-brise, l'appareil comprenant un panneau ayant un motif connu qui est monté à une distance fixe $z$ sur un second côté de la glace de pare-brise à l'intérieur d'un champ de vision de la caméra, de telle sorte que la caméra puisse acquérir une image d'étalonnage du panneau à travers la glace de pare-brise.

**12.** Appareil selon la revendication 11 comprenant un véhicule ayant un cadre de pare-brise, où la glace de pare-brise est installée dans le cadre de pare-brise du véhicule et la caméra est montée à l'intérieur du véhicule.

**13.** Procédé de rectification d'images acquises par au moins une caméra d'un système basé sur une caméra d'un véhicule ayant une glace de pare-brise, le procédé comprenant les étapes consistant :

à étalonner le système basé sur une caméra à l'aide d'un procédé selon l'une des revendications 1 à 9,
à acquérir une image avec la caméra, et
à calculer, à l'aide de la déformation de pare-brise stockée dans le système basé sur une caméra, un ensemble de points dans l'espace qui est projeté vers un emplacement sur l'image.

**14.** Procédé selon la revendication 13, où un emplacement en 3D d'un objet est déterminé par triangulation à l'aide d'au moins deux images acquises à des emplacements différents.

**15.** Système basé sur une caméra comprenant une unité de calcul qui comprend un code de programme qui, lorsqu'il est exécuté par l'unité de calcul, exécute un procédé selon l'une quelconque des revendications 13 et 14.

Fig. 1

Fig. 2

Fig. 3

**EP 3 293 701 B1**

**REFERENCES CITED IN THE DESCRIPTION**

**Patent documents cited in the description**

- WO 2015133414 A1